(19) Europäisches Patentamt
European Patent Office
Office européen des brevets

(11) **EP 3 086 386 A1**

(12) **EUROPEAN PATENT APPLICATION**

(43) Date of publication:
**26.10.2016 Bulletin 2016/43**

(21) Application number: **16000821.5**

(22) Date of filing: **11.04.2016**

(51) Int Cl.:
$H01M \ 4/04^{(2006.01)}$    $H01M \ 4/134^{(2010.01)}$
$H01M \ 4/1395^{(2010.01)}$    $H01M \ 4/38^{(2006.01)}$
$H01M \ 4/48^{(2006.01)}$

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.04.2015 JP 2015087457**

(71) Applicant: **Shin-Etsu Chemical Co., Ltd.
Chiyoda-ku
Tokyo (JP)**

(72) Inventors:
- **Kamo, Hiromichi**
  **Annaka-shi, Gunma-ken (JP)**
- **Hirose, Takakazu**
  **Annaka-shi, Gunma-ken (JP)**
- **Matsuno, Takumi**
  **Annaka-shi, Gunma-ken (JP)**
- **Yoshikawa, Hiroki**
  **Annaka-shi, Gunma-ken (JP)**

(74) Representative: **Wibbelmann, Jobst
Wuesthoff & Wuesthoff
Patentanwälte PartG mbB
Schweigerstrasse 2
81541 München (DE)**

(54) **NEGATIVE ELECTRODE ACTIVE MATERIAL FOR NON-AQUEOUS ELECTROLYTE SECONDARY BATTERY, METHOD OF PRODUCING THE SAME, NON-AQUEOUS ELECTROLYTE SECONDARY BATTERY USING THE NEGATIVE ELECTRODE ACTIVE MATERIAL, AND METHOD OF PRODUCING NEGATIVE ELECTRODE MATERIAL FOR NON-AQUEOUS ELECTROLYTE SECONDARY BATTERY**

(57) The present invention provides a negative electrode active material for a non-aqueous electrolyte secondary battery, including negative electrode active material particles containing a silicon compound expressed by $SiO_x$ where $0.5 \leq x \leq 1.6$, the silicon compound containing a lithium compound, wherein a test cell combining an electrode containing the negative electrode active material particles and a counter electrode composed of a metallic lithium exhibits a first efficiency of 82% or more, and a charge capacity of the test cell at a voltage, of the electrode of 0.17V ranges from 7% to 30% of a first discharge capacity of the test cell when the test cell is successively subjected to a constant current charge until the voltage of the electrode reaches 0.0V, a constant voltage charge until a current is decreased to one tenth of a current at the constant current charge, and a constant current discharge until the voltage of the electrode reaches 1.2V. This negative electrode active material can increase the battery capacity and improve the cycle performance.

EP 3 086 386 A1

**Description**

BACKGROUND OF THE INVENTION

Field of the Invention

The present invention relates to a negative electrode active material for a non-aqueous electrolyte secondary battery, a method of producing the same, a non-aqueous electrolyte secondary battery using the negative electrode active material, and a method of producing a negative electrode material for a non-aqueous electrolyte secondary battery.

Description of the Related Art

In recent years, small electronic devices, represented by mobile terminals, have been widely used and urgently required to reduce the size and weight and to increase the life. Such requirement has advanced the development of particularly small, lightweight secondary batteries with higher energy density. These secondary batteries are considered to find application not only for small electronic devices but for large electronic devices such as, typically, automobiles as well as power storage systems such as, typically, houses.

Among those, lithium-ion secondary batteries are easy to reduce the size and increase the capacity and have higher energy density than those of lead or nickel-cadmium batteries, receiving considerable attention.

The lithium-ion secondary battery has positive and negative electrodes, a separator, and an electrolyte. The negative electrode includes a negative electrode active material related to charging and discharging reactions.

A negative electrode active material, which is usually made of a carbon material, is required to further improve the battery capacity for recent market requirement. Use of silicon as a negative electrode active material is considered to improve the battery capacity, for silicon has a logical capacity (4199 mAh/g) ten times larger than does graphite (372 mAh/g). Such a material is thus expected to significantly improve the battery capacity. The development of silicon materials for use as negative electrode active materials includes not only silicon as a simple but also alloy thereof and a compound thereof such as typically oxides. The consideration of active material shapes for carbon materials ranges from a standard application type to an integrated type in which the materials are directly accumulated on a current collector.

Use of silicon as a main material of a negative electrode active material, however, expands or shrinks a negative electrode active material particle when charging or discharging, thereby making the negative electrode active material particle easy to break particularly near its surface layer. In addition, this active material particle produces ionic substances in its interior and is thus easy to break. The breakage of the surface layer of the negative electrode active material particle creates a new surface, increasing a reaction area of the negative electrode active material particle. The new surface then causes the decomposition reaction of an electrolyte and is coated with a decomposition product of the electrolyte, thereby consuming the electrolyte. This makes the cycle performance of the battery easy to reduce.

Various materials and configurations of a negative electrode for a lithium-ion secondary battery mainly using a silicon material have been considered to improve the initial efficiency and the cycle performance of the battery.

More specifically, a vapor deposition method is used to accumulate silicon and amorphous silicon dioxide simultaneously so that better cycle performance and greater safety are achieved (See Patent Document 1, for example). Moreover, a carbon material, an electronic conduction material, is disposed on the surface of silicon oxide particles so that a higher battery capacity and greater safety are achieved (See Patent Document 2, for example). Moreover, an active material including silicon and oxygen is produced to form an active material layer having a higher ratio of oxygen near a current collector so that improved cycle performance and higher input-output performance are achieved (See Patent Document 3, for example). Moreover, silicon active material is formed so as to contain oxygen with an average content of 40 at% or less and with a higher oxygen content near a current collector so that improved cycle performance is achieved (See Patent Document 4, for example).

Moreover, a nano-complex including Si-phase, $SiO_2$, $M_yO$ metal oxide is used to improve the first charge and discharge efficiency (See Patent Document 5, for example). Moreover, a lithium containing material is added to a negative electrode, and pre-doping that decompose lithium and moves the lithium to a positive electrode at a higher negative-electrode potential so that the first charge and discharge efficiency is improved (See Patent Document 6, for example).

Moreover, $SiO_x$ ($0.8 \leq x \leq 1.5$) having a particle size ranging from 1 $\mu$m to 50 $\mu$m and a carbon material are mixed and calcined at a high temperature so that improved cycle performance is achieved (See Patent Document 7, for example). Moreover, a mole ratio of oxygen to silicon in a negative electrode active material is adjusted in the range from 0.1 to 0.2 so as to hold a difference between the maximum and the minimum of the oxygen-to-silicon mole ratio near the interface between the active material and a current collector at 0.4 or less, so that improved cycle performance is achieved (See Patent Document 8, for example). Moreover, a metal oxide containing lithium is used to improve the battery load characteristic (See Patent Document 9, for example). Moreover, a hydrophobic layer such as a silane compound is formed in the surface layer of a silicon material so that improved cycle performance is achieved (See Patent Document 10, for example).

Moreover, a silicon oxide is used and coated with graphite to give conductivity so that improved cycle performance is achieved (See Patent Document 11, for example). Patent Document 11 describes that a shift value of the graphite coating, which is obtained from a Raman spectrum, has broad peaks at 1330cm$^{-1}$ and 1580cm$^{-1}$ and a ratio $I_{1330}/I1_{580}$ of its intensity shows $1.5<I_{1330}/I_{1580}<3$.

Moreover, a particle having an Si-microcrystal phase dispersing in a silicon dioxide is used to achieve a higher battery capacity and improved cycle performance (See Patent Document 12, for example). Finally, a silicon oxide having a silicon-to-oxygen atomicity ratio of 1:y ($0<y<2$) is used to improve overcharge and overdischarge performance (See Patent Document 13, for example).

[Citation List]

[Patent Literature]

[Patent Document 1] Japanese Patent Application Publication No. 2001-185127
[Patent Document 2] Japanese Patent Application Publication No. 2002-042806
[Patent Document 3] Japanese Patent Application Publication No. 2006-164954
[Patent Document 4] Japanese Patent Application Publication No. 2006-114454
[Patent Document 5] Japanese Patent Application Publication No. 2009-070825
[Patent Document 6] Japanese Patent Application Publication No. 2013-513206
[Patent Document 7] Japanese Patent Application Publication No. 2008-282819
[Patent Document 8] Japanese Patent Application Publication No. 2008-251369
[Patent Document 9] Japanese Patent Application Publication No. 2008-177346
[Patent Document 10] Japanese Patent Application Publication No. 2007-234255
[Patent Document 11] Japanese Patent Application Publication No. 2009-212074
[Patent Document 12] Japanese Patent Application Publication No. 2009-205950
[Patent Document 13] Japanese Patent No. 2997741

SUMMARY OF THE INVENTION

As described previously, small electronic devices, represented by mobile terminals, have been developed to improve their performance and increase their functions. Non-aqueous electrolyte secondary batteries, especially lithium-ion secondary batteries, which are used as main sources of the devices, have been required to increase the battery capacity. The development of non-aqueous electrolyte secondary batteries including negative electrodes mainly using silicon materials have been desired to solve this problem. The non-aqueous electrolyte secondary batteries using silicon materials need the same cycle performance as non-aqueous electrolyte secondary batteries using carbon materials.

The present invention was accomplished in view of the above problems, and an object thereof is to provide a negative electrode active material for a non-aqueous electrolyte secondary battery and a method of producing the same that can increase the battery capacity and improve the cycle performance. Another object of the present invention is to provide a non-aqueous electrolyte secondary battery using the negative electrode active material. Further object of the present invention is to provide a method of producing a negative electrode material for a non-aqueous electrolyte secondary battery that is increased in battery capacity and is excellent in cycle performance.

To achieve the objects, the present invention provides a negative electrode active material for a non-aqueous electrolyte secondary battery, comprising negative electrode active material particles containing a silicon compound expressed by $SiO_x$ where $0.5\leq x\leq1.6$, the silicon compound containing a lithium compound, wherein
a test cell combining an electrode containing the negative electrode active material particles and a counter electrode composed of a metallic lithium exhibits a first efficiency of 82% or more, and a charge capacity of the test cell at a voltage of the electrode of 0.17V ranges from 7% to 30% of a first discharge capacity of the test cell when the test cell is successively subjected to a constant current charge until the voltage of the electrode reaches 0.0V, a constant voltage charge until a current is decreased to one tenth of a current at the constant current charge, and a constant current discharge until the voltage of the electrode reaches 1.2V.

The test cell using the inventive negative electrode active material and the counter electrode formed of a metallic lithium exhibits a first intensity of 82% or more in the case that the test cell is subjected to the constant current charge, the constant voltage charge, and the constant current discharge under the above conditions. Such a negative electrode active material enables a non-aqueous electrolyte secondary battery using this material to have improved battery capacity and capacity retention rate since the unbalance between the positive electrode and the negative electrode is inhibited.

Moreover, the charge capacity of the test cell when the electrode containing the negative electrode active material particles has a voltage of 0.17V is 7% or more of the first discharge capacity of the test cell. This makes the degree of disproportionation of the silicon compound in the negative electrode active material particles appropriate, and prevents a crystal of silicon dioxide from excessively growing, thus providing good ionic conductivity. In addition, when the aforementioned charge capacity is 30% or less of the first discharge capacity of the test cell, a silicon crystallite in the silicon compound is sufficiently grown so that the amount of a site at which lithium ion is trapped (Li trapping site) during charge and discharge of the battery is decreased. Hereinafter, the negative electrode active material particle consisting of a silicon compound in the present invention is also referred to as "silicon-based active material particle".

The charge capacity at a voltage of the electrode of 0.17V preferably ranges from 11% to 30% of the first discharge capacity of the test cell.

When the charge capacity at a voltage of the electrode of 0.17V is within the above range, the degree of disproportionation of the silicon compound becomes more appropriate.

The discharge capacity at a voltage of the electrode of 0.4V preferably ranges from 35% to 60% of the first discharge capacity of the test cell. Further, the discharge capacity at a voltage of the electrode of 0.4V particularly preferably ranges from 40% to 50% of the first discharge capacity of the test cell.

When the aforementioned discharge capacity is 35% or more, the degree of disproportionation of the silicon compound is enough so that the Li trapping site at charging and discharging in battery is decreased. When the discharge capacity is 60% or less, the degree of disproportionation of the silicon compound is not excessively increased so that the expansion and contraction of the silicon compound with charge and discharge of the battery can be suppressed. In addition, these effect are improved when the discharge capacity is within the range of 40% to 50%.

The first discharge capacity of the test cell preferably ranges from 1200 mAh/g to 1520 mAh/g. Further, the first discharge capacity of the test cell particularly preferably ranges from 1200 mAh/g to 1450 mAh/g.

When the first discharge capacity of the test cell is 1520 mAh/g or less, since the negative electrode active material before the first charge sufficiently contains lithium, a secondary battery using this material exhibits more improved first efficiency. When the first discharge capacity of the test cell is 1200 mAh/g or more, the negative electrode active material before the first charge does not contain excess lithium, thus enabling to keep the electric conductivity and the ionic conductivity high.

The silicon compound preferably contains one or more of $Li_2SiO_3$, $Li_6Si_2O_7$, and $Li_4SiO_4$ therein.

When a $SiO_2$ component part, which is destabilized with insertion and extraction of lithium ion at charging and discharging in battery, in the negative electrode active material is previously modified into lithium silicate as mentioned above, the irreversible capacity of the battery generated at charging can be reduced. The first efficiency of the secondary battery is thereby more improved.

The silicon compound preferably contains one or more of $Li_2CO_3$, $Li_2O$, and $LiOH$ on a surface thereof.

When the silicon compound has on its surface such lithium compounds, a decomposition reaction of the silicon-based active material particles and the electrolyte can be inhibited, and the storage properties of the silicon-based active material particles are dramatically improved. Consequently, the retention rate of the secondary battery using this material is more improved.

The silicon compound is preferably modified by inserting lithium into the silicon compound in an electrochemical manner, a thermal manner, or both of them.

When the lithium compound is formed by a process including an electrochemical manner, a thermal manner, or both of them, the silicon compound contains a more stable lithium compound, which allows further improvement in the battery performances.

The silicon compound is preferably coated with a carbon coating.

The negative electrode active material having the silicon compound coated with a carbon coating exhibits high conductivity.

In the inventive negative electrode active material, a mass of the carbon coating preferably ranges from 5 mass% to 20 mass% of a total mass of the silicon compound and the carbon coating.

When the mass percentage of the carbon coating is within the above range, sufficient conductivity can be provided, and the silicon compound, which has high capacity, can be contained in a proper proportion so that sufficient battery capacity and volume energy density can be ensured.

The negative electrode active material particles preferably exhibits a diffraction peak having a half width ($2\theta$) of 1.2° or more, the diffraction peak being attributable to an Si(111) crystal face and obtained by X-ray diffraction, and a crystallite size attributable to the crystal face is 7.5 nm or less.

This silicon compound, which exhibits the above half width and crystallite size, has low crystallinity and contains few Si crystal, so that the battery performances can be improved. In addition, the presence of the silicon compound having low crystallinity enables stable generation of a lithium compound.

The negative electrode active material particles preferably have a median size ranging from 0.5 $\mu$m to 20 $\mu$m.

The negative electrode active material containing the silicon-based active material particles with the above median size facilitates occlusion and emission of lithium ions and inhibits the breakage of the silicon-based active material particles at charging and discharging. As a result, the capacity retention rate can be improved.

Furthermore, to achieve the above objects, the present invention provides a non-aqueous electrolyte secondary battery, comprising a negative electrode active material mentioned above and a carbon-based negative electrode active material.

The secondary battery further containing carbon-based active material particles in addition to the inventive silicon-based active material can achieve good cycle performance and initial charge and discharge performance with high capacity of the negative electrode.

The negative electrode active material is preferably contained in amount of 10 mass% or more relative to the carbon-based negative electrode active material.

The secondary battery containing the silicon-based active material, which has high capacity, within the above range exhibits higher capacity.

Furthermore, to achieve the above objects, the present invention provides a method of producing a negative electrode active material for a non-aqueous electrolyte secondary battery, the method comprising:

producing particles of a silicon compound expressed by $SiO_x$ where $0.5 \leq x \leq 1.6$; and

inserting lithium into the particles of the silicon compound and thereby forming a lithium compound in the silicon compound to modify the particles of the silicon compound, wherein

the particles of the silicon compound is modified so that a test cell combining an electrode containing the modified particles of the silicon compound and a counter electrode composed of a metallic lithium exhibits a first efficiency of 82% or more, and a charge capacity of the test cell at a voltage of the electrode of 0.17V ranges from 7% to 30% of a first discharge capacity of the test cell when the test cell is successively subjected to a constant current charge until a voltage of the electrode reaches 0.0V, a constant voltage charge until a current is decreased to one tenth of a current at the constant current charge, and a constant current discharge until the voltage of the electrode reaches 1.2V, whereby the modified particles of the silicon compound is obtained as a negative electrode active material.

Such a producing method enables the inventive negative electrode active material for a non-aqueous electrolyte secondary battery to be easily obtained by adjusting the modification condition of the particles of the silicon compound.

Furthermore, to achieve the above objects, the present invention provides a method of producing a negative electrode material for a non-aqueous electrolyte secondary battery, the negative electrode material containing negative electrode active material particles, the method comprising:

producing particles of a silicon compound expressed by $SiO_x$ where $0.5 \leq x \leq 1.6$;

inserting lithium into the particles of the silicon compound and thereby forming a lithium compound in the silicon compound to modify the particles of the silicon compound;

selecting, from the modified particles of the silicon compound, silicon compound particles satisfying that a test cell combining an electrode containing the silicon compound particles and a counter electrode composed of a metallic lithium exhibits a first efficiency of 82% or more, and a charge capacity of the test cell at a voltage of the electrode of 0.17V ranges from 7% to 30% of a first discharge capacity of the test cell when the test cell is successively subjected to a constant current charge until a voltage of the electrode reaches 0.0V, a constant voltage charge until a current is decreased to one tenth of a current at the constant current charge, and a constant current discharge until the voltage of the electrode reaches 1.2V; and

producing a negative electrode material using the selected silicon compound particles as a negative electrode active material particles.

Such a producing method enables the production of a negative electrode material for a non-aqueous electrolyte secondary battery that exhibits excellent capacity retention rate and first efficiency with high capacity by using the selected silicon compound as the silicon-based active material particles.

The inventive negative electrode active material exhibits high capacity, good cycle performance, and good initial charge and discharge performance when used as a negative electrode active material of a non-aqueous electrolyte secondary battery. Moreover, the secondary battery containing the inventive negative electrode active material can achieve the same performances. In addition, electronic devices, machine tools, electric vehicles, and power storage systems, etc., using the inventive secondary battery also can achieve the same effect.

Furthermore, the method of producing a negative electrode active material and the method of producing a negative electrode material of the present invention can produce a negative electrode active material and a negative electrode material having excellent cycle performance and initial charge and discharge performance with high capacity, respectively.

BRIEF DESCRIPTION OF THE DRAWINGS

FIG. 1 is a schematic cross-sectional view showing an exemplary configuration of a negative electrode using the inventive negative electrode active material for a non-aqueous electrolyte secondary battery;
FIG. 2 shows an electrochemical Li-doping modification apparatus used in production of silicon-based active material particles contained in a negative electrode for a non-aqueous electrolyte secondary battery in the present invention;
FIG. 3 is an exploded view showing an exemplary configuration of the inventive non-aqueous electrolyte secondary battery (a lithium-ion secondary battery of laminate film type); and
FIG. 4 is a schematic view showing the first charge and discharge curve of an electrode containing the inventive negative electrode active material for a non-aqueous electrolyte secondary battery in a test cell composed of the electrode containing the inventive negative electrode active material and a lithium counter electrode.

DETAILED DESCRIPTION OF THE PREFERRED EMBODIMENTS

Hereinafter, embodiments of the present invention will be described, but the present invention is not restricted to these embodiments.

As described previously, use of a negative electrode mainly made of a silicon material, for use in a non-aqueous electrolyte secondary battery, has been considered to increase the capacity of the non-aqueous electrolyte secondary battery.

The non-aqueous electrolyte secondary battery using a silicon material is required to have the same cycle performance as a non-aqueous electrolyte secondary battery using a carbon material; however, no one has yet proposed a negative electrode material for this type of battery having the same cycle stability as a non-aqueous electrolyte secondary battery using a carbon material. In addition, a silicon compound especially containing oxygen has a lower first efficiency than that of any carbon material, thereby limiting improvement in battery capacity.

In view of this, the present inventors diligently conducted study on a negative electrode active material that allows a non-aqueous secondary battery using a negative electrode made of this material to have good cycle performance and first efficiency, bringing the present invention to completion.

The inventive negative electrode active material for a non-aqueous electrolyte secondary battery has negative electrode active material particles. This negative electrode active material particles, which is referred to as silicon-based active material particles, contain a silicon compound ($SiO_x$ where $0.5 \leq x \leq 1.6$) having a lithium compound. When a test cell combining an electrode containing this silicon-based active material particles and a counter electrode composed of a metallic lithium is successively subjected to a constant current charge until the voltage of the electrode reaches 0.0V, a constant voltage charge until a current is decreased to one tenth of a current at the constant current charge, and a constant current discharge until the voltage of the electrode reaches 1.2V, the test cell exhibits a first efficiency of 82% or more. Moreover, under this condition, the charge capacity of the test cell at a voltage of the electrode of 0.17V ranges from 7% to 30% of the first discharge capacity of the test cell.

The silicon-based active material particles in the present invention have high stability to water slurry used in the battery production because lithium is contained therein, thereby improving the cycle performance. Moreover, the silicon-based active material particles containing lithium can prevent the destabilization of the $SiO_2$ component part when lithium is inserted or extracted at charging and discharging, thereby further improving the first efficiency. Moreover, since the silicon-based active material particles in the present invention is a negative electrode material mainly consisting of the silicon compound, the battery capacity can be increased.

In addition, when the negative electrode active material satisfies the requirement that the test cell as mentioned above exhibits a first intensity of 82% or more when subjected to the constant current charge, the constant voltage charge, and the constant current discharge under the above condition, a battery using this material can achieves improved battery capacity and capacity retention rate since the unbalance between the positive electrode and the negative electrode is inhibited.

When the charge capacity of the test cell at a voltage of the electrode of 0.17V is less than 7% of the first discharge capacity of the test cell, disproportionation of the silicon compound excessively progresses so that a silicon crystallite is excessively grown, and a crystal of silicon dioxide near the crystallite is also grown. Accordingly, ionic conductivity is lowered, and the battery performances such as the cycle performance and the first charge and discharge efficiency are deteriorated. When the aforementioned charge capacity is more than 30% of the first discharge capacity of the test cell, disproportionation in the silicon compound is inadequate so that a silicon crystallite is insufficiently grown, and many Li trapping sites remain, which causes the reduction in first efficiency.

By contrast, the silicon-based active material particles in the present invention satisfies the requirement that the aforementioned charge capacity is 7% or more of the first discharge capacity of the test cell. This makes the degree of disproportionation of the silicon compound appropriate, and prevents a crystal of silicon dioxide from excessively growing, thus providing good ionic conductivity and improving the battery performances. In addition, when the aforementioned charge capacity is 30% or less of the first discharge capacity of the test cell, a silicon crystallite in the silicon compound is sufficiently grown, and the amount of the Li trapping site at charging and discharging in battery is reduced, resulting in the improvement in first efficiency of the battery.

<1. Negative Electrode for Non-Aqueous Electrolyte Secondary Battery>

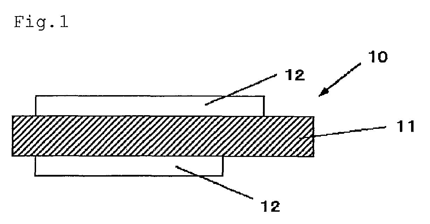

Hereinafter, a negative electrode for a non-aqueous electrolyte secondary battery using the inventive negative electrode active material will be described. FIG. 1 shows a cross-sectional view of a configuration of a negative electrode for a non-aqueous electrolyte secondary battery (simply referred to as a "negative electrode" below) according to an embodiment of the invention.

[Configuration of Negative Electrode]

As shown in FIG. 1, the negative electrode 10 has a negative electrode active material layer 12 on a negative electrode current collector 11. The negative electrode active material layer 12 may be disposed on one side or both sides of the negative electrode current collector 11. The negative electrode current collector 11 is not necessarily needed in a negative electrode using the inventive negative electrode active material.

[Negative Electrode Current Collector]

The negative electrode current collector 11 is made of a highly conductive and mechanically strong material. Examples of the conductive material used for the negative electrode current collector 11 include copper (Cu) and nickel (Ni). Such conductive materials preferably have inability to form an intermetallic compound with lithium (Li).
The negative electrode current collector 11 preferably contains carbon (C) and sulfur (S) beside the main element since these elements improve the physical strength of the current collector. In particular, when the active material layer contains a material expandable at charging, the current collector including the above elements can inhibit deformation of the electrodes and the current collector itself. The amount of the contained elements is preferably, but not particularly limited to, 100 mass ppm or less. This amount enables effective inhibition of the deformation.
The surface of the negative electrode current collector 11 may or may not be roughed. Examples of the negative electrode current collector roughened include a metallic foil subjected to an electrolyzing process, an embossing process, or a chemical etching process. Examples of the negative electrode current collector that is not roughened include a rolled metallic foil.

[Negative Electrode Active Material Layer]

The negative electrode active material layer 12 contains the inventive negative electrode active material and may further contain other materials such as a negative electrode binder or a negative electrode conductive additive depending on battery design. The negative electrode active material may include a carbon-based active material, in addition to the negative electrode active material particles (silicon-based active material particles) containing a silicon compound ($SiO_x$ where $0.5 \leq x \leq 1.6$) having a lithium compound. The inventive negative electrode active material for a non-aqueous electrolyte secondary battery can be used as a material constituting the negative electrode active material layer 12.
The silicon-based active material particles contained in the inventive negative electrode active material has the silicon compound, which is capable of occluding and emitting lithium ions. This silicon compound contains a lithium compound on its surface and/or in its inside.
As to the lithium compound contained on the surface of the silicon compound, one or more of $Li_2CO_3$, $Li_2O$, and $LiOH$ are preferably contained. Such a lithium compound on the surface can inhibit the reaction between the silicon compound and the electrolyte, thereby more improving the cycle performance.
As to the lithium compound contained inside the silicon compound, one or more of $Li_2SiO_3$, $Li_6Si_2O_7$, and $Li_4SiO_4$ are preferably contained. When a $SiO_2$ component part, which is destabilized with insertion and extraction of lithium ion at charging and discharging in battery, in the negative electrode active material is previously modified into lithium silicate as mentioned above, the irreversible capacity of the battery generated at charging can be reduced.
The lithium compound contained in the silicon compound can improve the battery performances as long as at least one type of the lithium compound is contained. When two or more lithium compounds are contained, the battery performances can be more improved.
As described above, the silicon-based active material particles contain a silicon compound ($SiO_x$, where

0.5≤x≤1.6). A preferable composition of the silicon compound is that x is close to 1. The reason is that this composition enables high cycle performance. The present invention does not necessarily intend a silicon material composition of 100% but permits a silicon material containing a minute amount of impurities.

The silicon compound having a lithium compound can be obtained by selectively modifying a part of the $SiO_2$ component produced within the silicon compound into the lithium compound. The production of such a selective compound, i.e., the modification of the silicon compound is preferably performed by a process including a thermal manner, an electrochemical manner, or both of them.

The modification (bulk modification) in a thermal manner or an electrochemical manner to produce the silicon-based active material particles enables reduction or prevention of the lithium compound formation in an Si region of the silicon compound, whereby the material is stabilized in the air, water slurry, or solvent slurry. A more stable material can be obtained by the modification in a thermal manner or an electrochemical manner than with a method in which a lithium metal is brought into direct contact with a negative electrode or negative electrode active material particles at room temperature (contact method).

These selective compounds (lithium compounds) can be formed in the electrochemical manner, for example, by voltage regulation or current regulation relative to lithium counter electrode (lithium source) in a modification apparatus; or in the thermal manner, for example, by adjusting firing conditions. The lithium compound contained in the silicon compound can be quantified by NMR (Nuclear Magnetic Resonance) and XPS (X-ray Photoelectron Spectroscopy). XPS and NMR measurement can be performed, for example, under the following conditions.

XPS

- Apparatus: an X-ray photoelectron spectroscopy apparatus
- X-ray Source: a monochromatic Al-Kα ray
- X-ray Spot Diameter: 100 μm
- Ar-ion Sputtering Gun Conditions: 0.5 kV, 2 mm x 2 mm
  $^{29}Si$-MAS-NMR
- Apparatus: a 700-NMR spectroscope made by Bruker Corp.
- Probe: a 4-mm-HR-MAS rotor, 50 μL
- Sample Rotation Speed: 10 kHz
- Temperature of Measurement Environment: 25°C

As mentioned above, the silicon-based active material particles in the present invention is such a material that the test cell combining an electrode containing the silicon-based active material particles and a counter electrode composed of a metallic lithium exhibits a first efficiency of 82% or more when the test cell is successively subjected to a constant current charge until the voltage of the electrode reaches 0.0V, a constant voltage charge until a current is decreased to one tenth of a current at the constant current charge, and a constant current discharge until the voltage of the electrode reaches 1.2V (discharging cutoff voltage). Moreover, the silicon-based active material particles in the present invention is such a material that the charge capacity of the above test cell at an electrode voltage of 0.17V ranges from 7% to 30% of the first discharge capacity of the test cell. In particular, the charge capacity of the test cell at an electrode voltage of 0.17V preferably ranges from 11% to 30% of the first discharge capacity of the test cell.

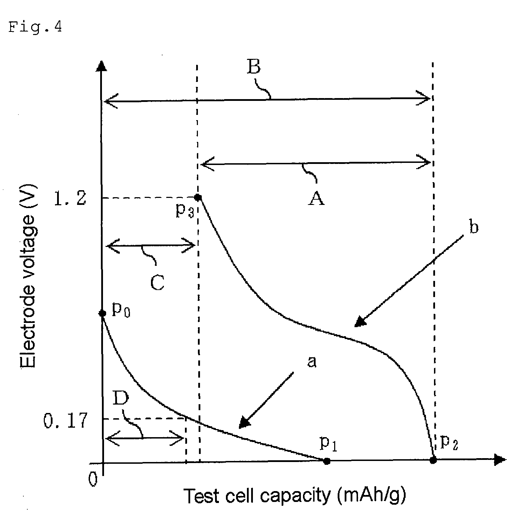

The relationship between the voltage of the electrode at the first charge and discharge of the test cell and the charge capacity of the test cell is here described with reference to the schematic view of the first charge and discharge curve shown in FIG. 4. FIG. 4 shows a first charge curve a and a first discharge curve b. First, the test cell is charged with constant current until the voltage of the electrode reaches 0.0V (corresponding to points $p_0$ to $p_1$ on the first charge curve a shown in FIG. 4). Then, the test cell is charged with a constant voltage of 0.0V until the current is decreased to one tenth of the current at the constant current charge (corresponding to points $p_1$ to $p_2$ on the first charge curve a shown in FIG. 4). Then, the test cell is discharged with constant current until the voltage of the electrode reaches 1.2V (corresponding to points $p_2$ to $p_3$ on the first discharge curve b shown in FIG. 4).

In the first charge and discharge shown in FIG. 4, the first efficiency (%) of the test cell can be obtained by calculating the percentage of the first discharge capacity A with respect to the first charge capacity B, i.e., A/B×100. In FIG. 4, C represents irreversible capacity. The silicon-based active material particles in the present invention is such a material that the test cell exhibits a first efficiency of 82% or more. Moreover, the silicon-based active material particles in the present invention is such a material that the charge capacity D at an electrode voltage of 0.17V as shown in FIG. 4 ranges from 7% to 30% of the first discharge capacity A of the test cell. That is, the silicon-based active material particles in the present invention is such a material that the first charge and discharge curve satisfies the relationship 0.07≤D/A≤0.30.

The negative electrode active material containing the silicon-based active material particles in which the first efficiency of the test cell and the relationship between the voltage of the electrode at the first charge and discharge and the charge capacity (i.e., the shape of the first charge and discharge curve as shown in FIG. 4) satisfy the above requirements can be produced by adjusting Li-doping modification conditions of the silicon compound. For example, as mentioned above, the amount and the type of the lithium compound to be formed can be controlled in the electrochemical manner, for example, by voltage regulation or current regulation relative to lithium counter electrode in a modification apparatus; or in the thermal manner, for example, by adjusting firing conditions. Thus, the silicon-based active material particles used in the test cell giving the shape of the first charge and discharge curve as mentioned above can be produced. Other exemplary method of adjusting the particles such that relationship between the charge capacity and the voltage of the electrode in the test cell satisfies the above range is to wash the particles with a solvent such as water or ethanol after Li-doping modification. The solvent used in this method may contain a basic substance.

The silicon-based active material particles in the present invention is preferably such a material that when the same test cell is subjected to the same constant current charge, constant voltage charge, and constant current discharge as above, the discharge capacity at a voltage of the electrode of 0.4V ranges from 35% to 60% of the first discharge capacity of the test cell. Moreover, the discharge capacity at a voltage of the electrode of 0.4V particularly preferably ranges from 40% to 50% of the first discharge capacity of the test cell.

When the aforementioned discharge capacity is 35% or more, the degree of disproportionation of the silicon compound is enough, so that existing amount of the Li trapping site at charging and discharging in battery is more decreased. The first efficiency of the battery using this particles is thereby more improved. When the aforementioned discharge capacity is 60% or less, the degree of disproportionation of the silicon compound is not excessively increased, so that the expansion and contraction of the silicon compound with charge and discharge of the battery can be suppressed. The cycle performance of the battery using this particles is thereby more improved. In addition, these effect are more improved when the discharge capacity is within the range of 40% to 50%.

As examples of the method of adjusting the discharge capacity within the above range, there may be mentioned a method of adjusting treatment temperature in Li-doping modification and a method of adjusting treatment temperature when a carbon coating is formed.

The first discharge capacity of the test cell preferably ranges from 1200 mAh/g to 1520 mAh/g. Further, the first discharge capacity of the test cell particularly preferably ranges from 1200 mAh/g to 1450 mAh/g.

When the first discharge capacity of the test cell is 1520 mAh/g or less, since the negative electrode active material before the first charge sufficiently contains lithium, a battery using this material exhibits more improved first efficiency. When the first discharge capacity of the test cell is 1200 mAh/g or more, the negative electrode active material before the first charge does not contain excess lithium, thus enabling to keep the electric conductivity and the ionic conductivity high.

As examples of the method of adjusting the first discharge capacity, there may be mentioned a method of adjusting the amount of lithium to be used in Li-doping modification and a method of adjusting firing temperature when a thermal modification is performed.

Moreover, in the present invention, the silicon compound is preferably coated with a carbon coating. The negative electrode active material containing silicon compound coated with a carbon coating has high conductivity, thus enabling to improve the battery performances. As the method of forming a carbon coating, there may be mentioned a method of coating the silicon compound with a carbon material (carbon compound) such as graphite.

Moreover, in the silicon-based active material particles in the present invention, the mass of the carbon coating preferably ranges from 5 mass% to 20 mass% of the total mass of the silicon compound and the carbon coating.

When the mass percentage of the carbon coating is within the above range, sufficient conductivity can be provided, and the silicon compound, which has high capacity, can be contained in a proper proportion so that sufficient battery capacity and volume energy density can be ensured. The method of coating with a carbon compound is preferably, but not particularly limited to, sugar carbonization or pyrolysis of hydrocarbon gas because these methods can improve coverage of the carbon coating on the surface of the silicon compound.

Moreover, in the present invention, the silicon-based active material particles preferably exhibits a diffraction peak having a half width (2θ) of 1.2° or more, the diffraction peak being attributable to an Si(111) crystal face and obtained by X-ray diffraction, and a crystallite size attributable to the crystal face is 7.5 nm or less.

This silicon compound, which exhibits the above half width and crystallite size, has low crystallinity and contains few Si crystal, so that the battery performances can be improved. In addition, the presence of the silicon compound having low crystallinity enables stable generation of a lithium compound within and/or on the silicon compound.

Moreover, in the present invention, the silicon-based active material particles preferably have a median size ranging from 0.5 μm to 20 μm. The negative electrode active material containing the silicon-based active material particles with the above median size is easy to occlude and emit lithium ions at charging and discharging, and the breakage of the particles is inhibited. When the median size is 0.5 μm or more, the surface area of the particles is not excessively large, and thus the battery irreversible capacity can be reduced. On the other hand, the median size of 20

μm or less is preferable since the breakage of the particles and the creation of a new surface are inhibited. The temperature of measurement environment for median size measurement is 25°C.

The negative electrode active material layer may contain negative electrode conductive additive besides the negative electrode active material. Example of the negative electrode conductive additive include carbon black, acetylene black, graphite such as flaky graphite, ketjen black, carbon nanotube, carbon nanofiber, or the combination thereof. These conductive additives are preferably particles having a median size smaller than that of the silicon compound.

In the present invention, the negative electrode active material layer 12 as shown in Fig. 1 may contain, in addition to the inventive negative electrode active material, a carbon material (carbon-based active material). In this manner, the negative electrode active material layer 12 can reduce its electrical resistance and a stress due to its expansion at charging. Examples of the carbon-based active material include pyrolytic carbons, cokes, glassy carbon fiber, a fired organic polymeric compound, and carbon black.

In this case, the inventive negative electrode preferably contains the silicon compound in amount of 10 mass% or more relative to the total amount of the carbon-based active material and the silicon compound. Such a negative electrode for a non-aqueous electrolyte secondary battery is not decreased in first efficiency and capacity retention rate. The upper limit of this content is preferably less than 90 mass%.

The negative electrode active material layer 12 may be formed by, for example, an application method. The application method is to mix the negative electrode active material particles, the binders, etc., in addition to the above conductive additive and the carbon-based active material as needed, and disperse the resultant mixture into an organic solvent or water to apply the resultant to a subject.

[Method of Producing Negative Electrode]

The method of producing a negative electrode will be described. The method of producing silicon-based active material particles contained in a negative electrode material used for the negative electrode will be now described. First, a silicon compound expressed by $SiO_x$ where $0.5 \leq x \leq 1.6$ is produced. Then, a lithium compound is formed on and/or within the silicon compound by inserting lithium into the silicon compound to modify the silicon compound. As the modification method, the electrochemical manner and the thermal manner are preferable as mentioned above. Before the modification, the silicon compound may be coated with a carbon coating. After the silicon-based active material particles are thus produced, the silicon-based active material particles are mixed with a conductive additive, a binder, and a solvent to obtain slurry. If necessary, a carbon-based active material may be added. Then, the slurry is applied to the surface of a negative electrode current collector and dried to form a negative electrode active material layer.

More specifically, the negative electrode can be produced by, for example, the following procedure.

First, a raw material capable of generating a silicon oxide gas is heated under an inert gas atmosphere or a reduced pressure at a temperature ranging from 900°C to 1600°C to produce the silicon oxide gas. The raw material is a mixture of metallic silicon powder and silicon dioxide powder. The mole ratio of the mixture preferably satisfies the relation of 0.8<metallic silicon powder/silicon dioxide powder<1.3, in consideration of the existence of oxygen on the metallic silicon powder surface and a minute amount of oxygen in a reactor. The Si-crystallites in the particles are controlled by adjustment of an arrangement range and a vaporization temperature, or heat treatment after the production. The produced gas is deposited on an adsorption plate. The temperature in the reactor is decreased to 100°C or less and then a deposit is taken out. The deposit is pulverized with a ball mill or a jet mill to form powder.

Then, the obtained powder material of the silicon compound may be coated with a carbon coating, but this step is not essential.

Thermal CVD is desirably used to form the carbon coating. This thermal CVD is to fill a furnace in which the silicon oxide powder is placed with a hydrocarbon gas and heat the interior of the furnace. The pyrolysis temperature is preferably, but not particularly limited to, 1200°C or less, more preferably 950°C or less. This temperature range enables the inhibition of an unintended disproportionation of the silicon compound.

In the case that the thermal CVD to form the carbon coating is performed, the carbon coating can be formed on the surface of the powder material while adjusting the coverage and thickness of the carbon coating by adjusting pressure and temperature inside the furnace.

The hydrocarbon gas preferably has a composition of $C_nH_m$ where $3 \geq n$, but is not particularly limited thereto, for this composition enables reduction in production cost and improvement in physical properties of a pyrolysis product.

Then, the lithium compound is formed in the silicon compound by inserting lithium into the powder material of the silicon compound to modify the particles of the silicon compound. At this time, the particles of the silicon compound is modified such that a test cell combining an electrode containing the modified particles of the silicon compound and a counter electrode composed of a metallic lithium exhibits a first efficiency of 82% or more, and a charge capacity of the test cell at a voltage of the electrode of 0.17V ranges from 7% to 30% of a first discharge capacity of the test cell when the test cell is successively subjected to a constant current charge until a voltage of the electrode reaches 0.0V, a constant voltage charge until a current is decreased to one tenth of a current at the constant current charge, and a constant current discharge until the voltage of the electrode reaches 1.2V. To perform the Li-doping modification of the silicon compound so as to achieve these properties, lithium is desirably inserted and extracted in an electrochemical manner or a thermal manner, more preferably in combination of both manners.

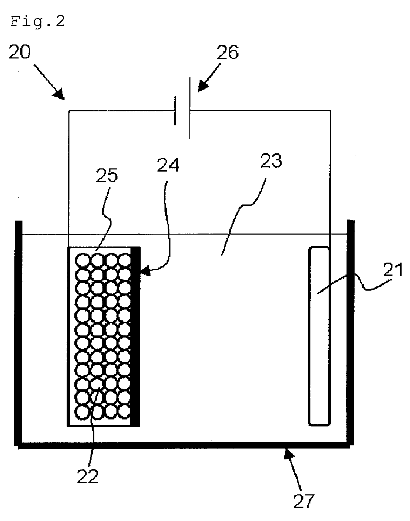

In the case that the silicon compound is modified in the electrochemical manner, although apparatus structure is not particularly limited, the silicon compound can be modified with, for example, a Li-doping modification apparatus 20 shown in FIG. 2. The Li-doping modification apparatus 20 shown in FIG. 2 has a bath 27 filled with an organic solvent 23, a positive electrode 21 (lithium source, modification source) provided within the bath 27 and connected to one terminal of a power source 26, a powder storage container 25 provided within the bath 27 and connected to the other terminal of the power source 26, and a separator 24 provided between the positive electrode 21 and the powder storage container 25. In the powder storage container 25, silicon oxide powder 22 is stored.

Examples of the organic solvent 23 in the bath 27 include ethylene carbonate, propylene carbonate, dimethyl carbonate, diethyl carbonate, ethylmethyl carbonate, fluoromethylmethyl carbonate, and difluoromethylmethyl carbonate. Examples of electrolyte salt contained in the organic solvent 23 include lithium hexafluorophosphate ($LiPF_6$) and lithium tetrafluoroborate ($LiBF_4$).

As the positive electrode 21, a lithium foil or a Li-containing compound may be used. Examples of the Li-containing compound include lithium carbonate, lithium oxide, lithium cobaltate, olivine iron lithium, lithium nickelate, and lithium vanadium phosphate. Smooth modification can be achieved by bonding the carbon particles to the silicon oxide powder 22 through carboxymethyl cellulose and styrene butadiene rubber. Before or after the modification treatment in the electrochemical manner, the lithium source may be mixed with the particles of the silicon compound and then fired to perform Li-doping modification in the thermal manner.

In the case that the modification is performed by mixing the particles of the silicon compound with a lithium source and firing the mixture, as the lithium source used in the modification, lithium metal, lithium naphthalenide, LiH, $LiAlH_4$, $Li_2O$, LiOH, $Li_2CO_3$, and an organic acid salt of lithium can be used. The firing temperature may be 600°C to 800°C.

As mentioned above, the resulting modified particles may not contain the carbon coating. However, when the amount and the type of the lithium compound is needed to be more uniformly controlled in the modification treatment in the electrochemical manner, voltage distribution of the silicon compound is required decreasing, and the carbon coating is desirably used.

After the lithium compound is formed in the silicon compound by inserting lithium into the particles of the silicon compound to modify the particles of the silicon compound, the method may include selecting, from the modified particles of the silicon compound, silicon compound particles satisfying that a test cell combining an electrode containing the silicon compound particles and a counter electrode composed of a metallic lithium exhibits a first efficiency of 82% or more, and a charge capacity of the test cell at a voltage of the electrode of 0.17V ranges from 7% to 30% of a first discharge capacity of the test cell when the test cell is successively subjected to a constant current charge until a voltage of the electrode reaches 0.0V, a constant voltage charge until a current is decreased to one tenth of a current at the constant current charge, and a constant current discharge until the voltage of the electrode reaches 1.2V. By this selecting step, the silicon-based active material particles exhibiting the aforementioned first charge and discharge performance in the test cell can be obtained.

In addition, when the negative electrode active material layer is formed by using the silicon-based active material particles as mentioned above, a carbon-based material having a median size smaller than that of the silicon compound may be added as a conductive additive. In this case, for example, acetylene black may be selected and added.

Moreover, when the negative electrode current collector contains 100 ppm or less of carbon and sulfur, higher effect for improving the battery performances can be expected.

<2. Lithium-Ion Secondary Battery>

A lithium-ion secondary battery using the above negative electrode for a lithium-ion secondary battery will now be described.

[Configuration of Laminate Film Secondary Battery]

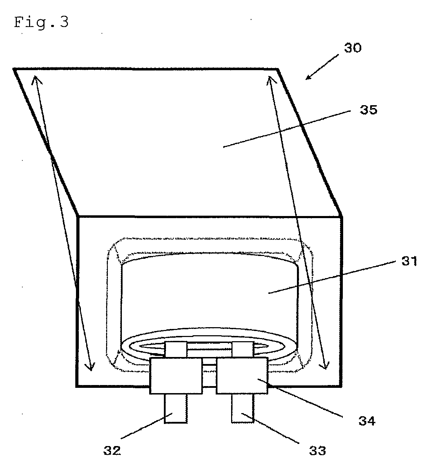

The laminate film secondary battery 30 shown in FIG. 3 includes a wound electrode body 31 interposed between sheet-shaped outer parts 35. The wound electrode body are formed by winding a positive electrode, a negative electrode, and a separator disposed between these electrodes. The electrode body may also be composed of a laminated part of the positive and negative electrodes, and a separator disposed between these electrodes. The electrode bodies of both types have a positive-electrode lead 32 attached to the positive electrode and a negative-electrode lead 33 attached to the negative electrode. The outermost circumference of the electrode bodies is protected by a protecting tape.

The positive-electrode lead and the negative-electrode lead, for example, extends from the interior of the outer parts 35 toward the exterior in one direction. The positive-electrode lead 32 is made of, for example, a conductive material such as aluminum; the negative-electrode lead 33 is made of, for example, a conductive material such as nickel or copper.

An example of the outer part 35 is a laminate film composed of a fusion-bond layer, a metallic layer, and a surface protecting layer stacked in this order. Two laminate films are fusion-bonded or stuck with an adhesive at the outer edge of their fusion-bond layers such that each fusion-bond layer faces the wound electrode body 31. The fusion-bond layer may be, for example, a film such as a polyethylene or polypropylene film; the metallic layer aluminum foil; the protecting layer nylon.

The space between the outer parts 35 and the positive and negative electrodes is filled with close adhesion films 34 to prevent air from entering therein. Exemplary materials of the close adhesion films include polyethylene, polypropylene, and polyolefin.

[Positive Electrode]

The positive electrode has a positive electrode active material layer disposed on one side or both sides of a positive electrode current collector as in the negative electrode 10, for examples, shown in FIG. 1.

The positive electrode current collector is made of, for example, a conductive material such as aluminum.

The positive electrode active material layer contains a positive electrode material that can occlude and emit lithium ions or the combination of positive electrode materials, and may contain a binder, a conductive additive, a dispersing agent, or other materials according to design. The same detailed description as described for the negative electrode binders and negative electrode conductive additive, for example, is then given for this binder and this conductive additive.

The positive electrode material is preferably a compound containing lithium. Examples of this compound include a complex oxide composed of lithium and transition metal elements, and a phosphoric acid compound composed of lithium and transition metal elements. Among them, a compound including at least one of nickel, iron, manganese, and cobalt is preferable for the positive electrode material. The chemical formula of this compound is expressed by, for example, $Li_xM_1O_2$ or $Li_yM_2PO_4$, where $M_1$ and $M_2$ represent at least one kind of transition metal elements, and x and y represent a value varied depending on a charging or discharging status of a battery, which typically satisfy $0.05 \leq x \leq 1.10$ and $0.05 \leq y \leq 1.10$.

Examples of the complex oxide composed of lithium and transition metal elements include a lithium cobalt complex oxide ($Li_xCoO_2$), a lithium nickel complex oxide ($Li_xNiO_2$). Examples of the phosphoric acid compound composed of lithium and transition metal elements include a lithium iron phosphoric acid compound ($LiFePO_4$), a lithium iron manganese phosphoric acid compound ($LiFe_{1-u}Mn_uPO_4(u<1)$). Use of these positive electrode materials enables a higher battery capacity and excellent cycle performance.

[Negative Electrode]

The negative electrode is configured as in the above negative electrode 10 for a lithium-ion secondary battery shown in FIG. 1, and, for example, has the negative electrode active material layer 12 disposed on both faces of the current collector 11. The negative electrode preferably has a negative-electrode charge capacity larger than a battery charge capacity (electrical capacitance) provided by the positive electrode active material, for this negative electrode itself can inhibit the precipitation of lithium metal.

The positive electrode active material layer is formed partially on both faces of the positive electrode current collector. The same is true of the negative electrode active material layer. Such a negative electrode may have, for example, an area at which the positive electrode active material layer is not present on the surface of the positive electrode current collector that the negative electrode active material layer faces. This area permits stable battery design.

The above area at which the positive and negative electrode active material layers do not face one another, a non-facing area, is hardly affected by charging and discharging. The status of the negative electrode active material layer is consequently maintained since its formation. This enables repeatable investigation of the composition of negative electrode active material with high precision without being affected by charging and discharging.

[Separator]

The separator separates the positive electrode and the negative electrode, prevents short circuit current due to contact of these electrodes, and passes lithium ions therethrough. This separator may be made of, for example, a porous film of synthetic resin or ceramics, or two or more stacked porous films. Examples of the synthetic resin include polytetrafluoroethylene, polypropylene, and polyethylene.

[Electrolyte]

A part of the active material layers or the separator is impregnated with a liquid electrolyte (an electrolyte solution). The electrolyte is composed of electrolyte salt dissolved in a solvent and may contain other materials such as additives.

The solvent may be, for example, a non-aqueous solvent. Examples of the non-aqueous solvent include ethylene carbonate, propylene carbonate, butylene carbonate, dimethyl carbonate, diethyl carbonate, ethylmethyl carbonate, carbonic acid propylmethyl ester, 1,2-dimethoxyethane, and tetrahydrofuran.

Among these, ethylene carbonate, propylene carbonate, dimethyl carbonate, diethyl carbonate, or ethylmethyl carbonate, or the combination thereof is preferable. Such solvent enables better performances. The combination of a viscous solvent, such as ethylene carbonate or propylene carbonate, and a non-viscous solvent, such as dimethyl carbonate, diethyl carbonate or ethylmethyl carbonate allows much better performances, for such a solvent improves the dissociation of electrolyte salt and ionic mobility.

The electrolyte solution preferably contains an unsaturated carbon bond cyclic carbonate as an additive, for this enables the formation of a stable coating on a negative electrode at charging and discharging and the inhibition of a decomposition reaction of the electrolyte. Examples of the unsaturated carbon bond cyclic carbonate include vinylene carbonate and vinyl ethylene carbonate.

In addition, the electrolyte solution preferably contains sultone (cyclic sulfonic acid ester) as an additive, for this enables improvement in chemical stability of a battery. Examples of the sultone include propane sultone and propene sultone.

In addition, the solvent preferably contains acid anhydride, for this enables improvement in chemical stability of the electrolyte. The acid anhydride may be, for example, propane disulfonic acid anhydride.

The electrolyte salt may contain, for example, at least one light metal salt such as lithium salt. Examples of the lithium salt include lithium hexafluorophosphate ($LiPF_6$), and lithium tetrafluoroborate ($LiBF_4$).

The content of the electrolyte salt in the solvent is preferably in the range from 0.5 mol/kg to 2.5 mol/kg. This content enables high ionic conductivity.

[Manufacture of Laminate Film Secondary Battery]

Firstly, a positive electrode is produced with the above positive electrode material as follows. A positive electrode mixture is created by mixing the positive electrode material with as necessary the binder, the conductive additive, and other materials, and dispersed in an organic solvent to form slurry of the positive-electrode mixture. This slurry is then applied to a positive electrode current collector with a coating apparatus such as a die coater having a knife roll or a die head, and dried by hot air to obtain a positive electrode active material layer. The positive electrode active material layer is finally compressed with, for example, a roll press. The compression may be performed under heating. The compression and heating may be repeated many times.

Secondly, a negative electrode active material layer is formed on a negative electrode current collector to produce a negative electrode through the same procedure as in the above production of the negative electrode 10 for a lithium-ion secondary battery.

The positive electrode and the negative electrode are produced in the same way as above. When these electrodes are produced, the active material layers can be formed on both faces of the positive and negative electrode current collector. In both the electrodes, the length of these active material layers formed on the faces may differ from one another (See FIG. 1).

Finally, the following steps are carried out in the order described. An electrolyte is prepared. With ultrasonic welding, the positive electrode lead 32 is attached to the positive electrode current collector and the negative-electrode lead 33 is attached to the negative electrode current collector. The positive and negative electrodes and the separator interposed therebetween are stacked or wound to produce the electrode body and a protecting tape is stuck to the outermost circumference of the body. The electrode body is flattened. The film-shaped outer part 35 is folded in half to interpose the electrode body therebetween. The outer edge of the half parts is stuck to one another by heat sealing such that one of the four sides is opened to house the electrode body. The close adhesion films 34 are inserted between the outer part 35 and the positive and negative electrode leads 32, 33. The above adjusted electrolyte is introduced from the open side in a prescribed amount to perform the impregnation of the electrolyte under a vacuum. The open side is stuck by vacuum heat sealing.

In this manner, the laminate film secondary battery 30 can be produced.

EXAMPLES

The present invention will be more specifically described below with reference to examples and comparative examples, but the present invention is not restricted to these examples.

(Example 1-1)

The procedure began with the production of silicon-based active material particles. First, a material in which metallic silicon and silicon dioxide were mixed (also referred to as material to be vaporized) was placed in a reaction furnace to obtain deposit under a vacuum of 10 Pa. The deposit was sufficiently cooled and then taken out to pulverize the deposit with a ball mill. After adjusting the particle size of the obtained powder, a carbon coating was formed thereon by thermal CVD. The powder coated with the carbon coating was mixed with lithium hydride and heated at 600°C to 800°C to perform a thermal Li-doping modification. Then, the powder was subjected to an electrochemical Li-doping modification in a mixed solvent having a propylene-carbonate-to-ethylenecarbonate volume ratio of 1:1 including 1.3 mol/kg of lithium hexafluorophosphate ($LiPF_6$) in electrochemical manner. Subsequently, the modified silicon compound was washed with water containing 10% ethanol. Then, the washed silicon compound was dried under a reduced pressure.

The silicon compound (silicon-based active material particles) after washing and drying contained $Li_2CO_3$, $Li_4SiO_4$, and $Li_2SiO_3$. The x-value of the silicon compound $SiO_x$ was 0.5. The median size $D_{50}$ of the silicon compound was 5 $\mu$m. The silicon compound exhibited a half width ($2\theta$) of the diffraction peak attributable to an Si(111) crystal face and obtainable by X-ray diffraction of 1.218° and a crystallite size attributable to the Si (111) crystal face of 7.21 nm. The content of the carbon coating is 5 mass% of the total of the silicon compound and the carbon coating. Moreover, as mentioned above, the silicon compound was subjected to the thermal Li-doping modification and the electrochemical Li-doping modification. Consequently, the mass concentration of lithium atom contained in the silicon-based active material particles was 13.5 mass%.

The lithium atom was quantified by ICP-AES (inductively coupled plasma atomic emission spectrometer) after the sample was dissolved in fluonitric acid and diluted with nitric acid approximately 100 fold.

Secondary, a test cell composed of an electrode containing the silicon-based active material particles and a lithium counter electrode was produced. In this case, a CR2032 button cell battery was assembled as the test cell.

The electrode containing the silicon-based active material particles was produced as follows. The silicon-based active material particles (the powder of the silicon compound) and a binder (polyacrylic acid, also referred to as PAA below), a first conductive additive (flaky graphite), a second conductive additive (acetylene black), and a third conductive additive (carbon nanotube) were mixed at a dry-weight ratio of 76.35:10.70:10.70:2.25. The mixture was diluted with water to form pasty mixture slurry. The water was used as a solvent for the polyacrylic acid of the binder. The mixture slurry was then applied to both surfaces of a current collector with a coating apparatus and then dried. The current collector used was an electrolytic copper foil, having a thickness of 20 $\mu$m. The current collector was finally dried under a vacuum at 90°C for 1 hour. The negative electrode material layer was thus formed.

The electrolyte of the test cell was produced as follows. A solvent was produced by mixing 4-fluoro-1,3-dioxolan-2-one (FEC), ethylene carbonate (EC), and dimethyl carbonate (DMC) and an electrolyte salt (lithium hexafluorophosphate, $LiPF_6$) was dissolved therein to produce an electrolyte. The composite of the solvent was FEC:EC:DMC=10:20:70 in term of the volume. The content of the electrolyte salt in the solvent was 1.0 mol/kg.

As the counter electrode, a metal lithium foil having a thickness of 0.5 mm was used. As the separator, polyethylene having a thickness of 20 $\mu$m was used.

Then, a bottom cover of the CR2032 button cell, the lithium foil, and the separator were stacked, 150 mL of the electrolyte was poured thereto, the negative electrode and a spacer (thickness: 1.0 mm) were stacked, 150 mL of the electrolyte was poured again, a spring and a top cover of the button cell were assembled in this order, and the assembly was crimped with an automatic coin cell crimping machine to produce the CR2032 button cell.

The produced CR2032 button cell was then charged with a constant current density of 0.2 mA/cm$^2$ until the voltage of the electrode reached 0.0V. After the voltage of the electrode containing the silicon-based active material particles reached 0.0V, the charging was continued with a constant voltage of 0.0V until the current density reached 0.02 mA/cm$^2$. Then, the button cell was discharged with a constant current density of 0.2 mA/cm$^2$ until the voltage of the electrode reached 1.2V. The first charge and discharge performance at this first charge and discharge was then examined.

As a result, the test cell exhibited the following first charge and discharge performance: the first discharge capacity was 1360 mAh/g; the first efficiency was 82.4%; the charge capacity at a voltage of the electrode of 0.17V was 16.8% of the first discharge capacity; the discharge capacity at a voltage of the electrode of 0.40V was 44% of the first discharge capacity. The first efficiency (hereinafter, also referred to as initial efficiency) was calculated by the following expression:

$$\text{First Efficiency (\%)} = \text{(First Discharge Capacity/First Charge Capacity)} \times 100$$

Then, the laminate film secondary battery 30 shown in FIG. 3 was produced to evaluate the battery performances of a non-aqueous electrolyte secondary battery using the inventive negative electrode active material.

The procedure began with the production of a positive electrode used in the laminate film secondary battery. Positive electrode active materials of 95 mass parts of $LiCoO_2$ (a lithium cobalt complex oxide), 2.5 mass parts of a positive electrode conductive additive (acetylene black), and 2.5 mass parts of a positive electrode binder (polyvinylidene fluoride, PVDF) were mixed to produce a positive-electrode mixture. The positive-electrode mixture was dispersed in an organic solvent (N-methyl-2-pyrrolidone, NMP) to form paste slurry. The slurry was applied to both surfaces of a positive electrode current collector with a coating apparatus having a die head and dried with a drying apparatus of hot-air type. The positive electrode current collector had a thickness of 15 $\mu$m. The resultant was finally compressed with a roll press.

A negative electrode used was produced in the same way as the electrode containing the silicon-based active material particles in the above test cell.

An electrolyte used was prepared in the same way as the electrolyte in the above test cell.

The laminate film secondary battery was assembled by the following procedure. An aluminum lead was first ultrasonic-welded to one end of the positive electrode current collector. A nickel lead was welded to one end of the negative electrode current collector. The positive electrode, a separator, the negative electrode, a separator were then stacked in this order and wound in a longitudinal direction to obtain a wound electrode body. The end of the wounded part was fixed by a PET protecting tape. The separators were a laminate film (thickness: 12 $\mu$m) composed of a porous polyethylene film interposed between porous polypropylene films. The electrode body was interposed between outer parts and the outer circumferences except one side were heat-sealed to house the electrode body therein. The outer parts were an aluminum laminate film composed of a nylon film, aluminum foil, and a polypropylene film stacked. The prepared electrolyte was poured from an open side to perform the impregnation of the electrolyte under a vacuum. The open side was stuck by heat sealing.

The cycle performance (retention rate %) of the laminate film secondary battery thus produced was examined.

The cycle performance was investigated in the following manner: First, two cycles of charging and discharging were performed at 25°C to stabilize the battery and the discharge capacity in the second cycle was measured. Next, the cycle of charging and discharging was repeated until the total number of cycles reached 100 cycles and the discharge capacity was measured every cycle. Finally, a capacity retention rate % was calculated by dividing the discharge capacity in the 100-th cycle by the discharge capacity in the second cycle and multiply the resultant by 100 to express as a percent. The cycle conditions were as follows: The secondary batteries were charged with a constant current of 2.5 mA/cm$^2$ until the voltage reached 4.3V. After this voltage reached 4.3V, the charging was continued while the current density became 0.25 mA/cm$^2$ at 4.3V. The batteries were then discharged with a constant current density of 2.5 mA/cm$^2$ until the voltage reached 3.0V.

(Examples 1-2 to 1-5, Comparative Examples 1-1 and 1-2)

Test cells and secondary batteries were produced as in example 1-1 except that oxygen amount in bulk of the silicon compound was adjusted. The oxygen amount was adjusted by changing proportion and temperature of the material to be vaporized. x-values of the silicon compound expressed by $SiO_x$ in examples 1-1 to 1-5, comparative examples 1-1 and 1-2 are given in Table 1.

The first charge and discharge performance of the test cells and the cycle performance (capacity retention rate) of the laminate film lithium-ion secondary batteries in examples 1-2 to 1-5, comparative examples 1-1 and 1-2 were investigated as in example 1-1. The result is given in Table 1.

Tables 1 to 9 show the capacity retention rate of the batteries using the silicon-based active material particles but not containing a carbon active material, such as natural graphite (having an average size of 20 $\mu$m, for example). In other words, values depending on the silicon-based active material particles are shown in Tables 1 to 9. This value allowed the observation of variation in retention rate depending only on differences of the silicon compound (such as differences in oxygen amount of the silicon compound, lithium compound contained in the silicon compound, crystallinity of the silicon compound, median size of the silicon-based active material particles, charge capacity of the test cell at 0.17V, discharge capacity of the test cell at 0.4V, and first discharge capacity of the test cell) or a difference in content of the carbon coating.

[Table 1]

| Table 1 | x | First efficiency of test cell (%) | Capacity retention rate of secondary battery (%) |
|---|---|---|---|
| Comparative example 1-1 | 0.3 | 79.8 | 64.1 |
| Example 1-1 | 0.5 | 82.4 | 80.1 |
| Example 1-2 | 0.7 | 83.4 | 82.1 |
| Example 1-3 | 0.9 | 84.5 | 83.5 |
| Example 1-4 | 1.2 | 83.1 | 82.4 |
| Example 1-5 | 1.45 | 82.6 | 81.6 |
| Comparative example 1-2 | 1.8 | 71.6 | 75.5 |

$D_{50}$=5μm, XRD half width $2\theta$=1.218°, Si(111) crystallite: 7.21nm, carbon coverage: 5 mass%, Li compound: [$Li_4SiO_4$,$Li_2SiO_3$,$Li_2CO_3$], discharge capacity at 0.40V: 44%, charge capacity at 0.17V:16.8%, modification method: thermal doping + electrochemical doping, first discharge capacity of test cell: 1360 mAh/g, binder: polyacrylic acid, electrolyte: FEC:EC:DMC=1:2:7 $LiPF_6$ 1.0mol/kg, positive electrode: $LiCoO_2$

As shown in Table 1, the silicon compounds expressed by $SiO_x$ having an x-value out of 0.5≤x≤1.6 were deteriorated in battery performances. In comparative example 1-1, for example, the capacity retention rate of the secondary battery significantly degraded because of lack of the oxygen amount (x=0.3). In comparative example 1-2, on the other hand, the measurement was impossible because retention rate of the secondary battery degraded due to reduction in conductivity caused by a large amount of oxygen (x=1.8).

(Examples 2-1 and 2-2, Comparative Examples 2-1 to 2-3)

Test cells and secondary batteries were produced as in example 1-3 except that conditions of Li-doping treatment (bulk modification), i.e., Li-doping treatment procedure in the silicon compound expressed by $SiO_x$ was adjusted to change the type of lithium compound contained in the silicon compound. The first charge and discharge performance of the test cells and the cycle performance (capacity retention rate) of the laminate film lithium-ion secondary batteries in examples 2-1 and 2-2, comparative examples 2-1 to 2-3 were investigated. The result is given in Table 2.

[Table 2]

| Table 2 | Li compound | First discharge capacity of test cell (mAh/g) | First efficiency of test cell (%) | Capacity retention rate of secondary battery (%) |
|---|---|---|---|---|
| Comparative example 2-1 | | 1620.0 | 70.2 | 70.8 |
| Comparative example 2-2 | $Li_2SiO_3$ | 1560.0 | 74.1 | 72.4 |
| Comparative example 2-3 | $Li_2CO_3$ | 1540.0 | 76.5 | 74.1 |
| Example 2-1 | $Li_4SiO_4$, $Li_2SiO_3$ | 1480.0 | 82.2 | 79.1 |
| Example 2-2 | $Li_2CO_3$, $Li_2SiO_3$ | 1440.0 | 83.2 | 82.1 |
| Example 1-3 | $Li_4SiO_4$, $Li_2SiO_3$, $Li_2CO_3$ | 1360.0 | 84.5 | 83.5 |

SiOx (x=0.9), $D_{50}$=5μm, XRD half width $2\theta$=1.218°, Si(111) crystallite: 7.21nm, carbon coverage: 5%, discharge capacity at 0.40V: 44%, charge capacity at 0.17V:16.8%, modification method: thermal doping + electrochemical doping, binder: polyacrylic acid, electrolyte: FEC:EC:DMC=1:2:7 $LiPF_6$ 1.0mol/kg, positive electrode: $LiCoO_2$

As shown in Table 2, the silicon-based active material in examples 2-1 and 2-2 exhibited better capacity retention rate than that of comparative examples 2-1 to 2-3. When two or more lithium compounds were contained in the silicon compound, the test cell more surely exhibited a first efficiency of 82% or more. In particular, $Li_2CO_3$, $Li_2SiO_3$, and $Li_4SiO_4$ are preferably contained as the lithium compound. The more type of these lithium compounds are contained, the more cycle performance of the secondary battery is improved.

(Examples 3-1 to 3-4, Comparative Examples 3-1 to 3-4)

Test cells and secondary batteries were produced as in example 1-3 except that the first charge capacity of the test cell at a voltage of the electrode of 0.17V was changed as shown in Table 3. The charge capacity can be adjusted by changing the amount of the solvent used for washing and the washing temperature when the silicon compound is washed after Li-doping modification. The first charge and discharge performance of the test cells and the capacity retention rate of the secondary batteries in examples 3-1 to 3-4, comparative examples 3-1 to 3-4 were investigated. The result is given in Table 3.

[Table 3]

SiOx(x=0.9), $D_{50}$=5μm, XRD half width 2θ=1.218°, Si(111) crystallite: 7.21nm, carbon coverage: 5%, Li compound: [$Li_4SiO_4$,$Li_2SiO_3$,$Li_2CO_3$], discharge capacity at 0.40V: 44%, modification method: thermal doping + electrochemical doping, first discharge capacity of test cell: 1360 mAh/g, binder: polyacrylic acid, electrolyte: FEC:EC:DMC=1:2:7 $LiPF_6$ 1.0mol/kg, positive electrode: $LiCoO_2$

| Table 3 | Ratio of charge capacity at 0.17V to first discharge capacity (%) | First efficiency of test cell (%) | Capacity retention rate of secondary battery (%) |
|---|---|---|---|
| Comparative example 3-1 | 1.4 | 79.8 | 75.2 |
| Comparative example 3-2 | 5.5 | 81.2 | 76.1 |
| Example 3-1 | 7.0 | 82.0 | 82.0 |
| Example 3-2 | 10.8 | 82.1 | 82.5 |
| Example 1-3 | 16.8 | 84.5 | 83.5 |
| Example 3-3 | 21.2 | 84.3 | 83.8 |
| Example 3-4 | 30.0 | 82.5 | 82.7 |
| Comparative example 3-3 | 32.0 | 81.3 | 76.0 |
| Comparative example 3-4 | 44.0 | 78.8 | 75.1 |

As shown in Table 3, when the first charge capacity of the test cell at a voltage of the electrode of 0.17V ranged from 7% to 30%, the secondary battery exhibited good retention rate. In particular, the secondary battery exhibited better retention rate within the range of 11% to 30%.

(Examples 4-1 to 4-8)

Test cells and laminate film secondary batteries were produced as in example 1-3 except that the crystallinity of the silicon compound was changed. The crystallinity can be adjusted by a heat treatment under a non-atmospheric condition after insertion and extraction of lithium. Table 4 shows half width of the silicon-based active materials in examples 4-1 to 4-8. Although example 4-8 exhibited a crystallite size of 20.221°, this value was obtained by fitting with analysis software because the peak value was not obtained. Thus, the silicon compound in examples 4-8 was substantially amorphous. The first charge and discharge performance of the test cells and the capacity retention rate of the secondary batteries in examples 4-1 to 4-8 were investigated. The result is given in Table 4.

[Table 4]

SiOx (x=0.9), $D_{50}$=5μm, carbon coverage: 5%, Li compound: [$Li_4SiO_4$,$Li_2SiO_3$,$Li_2CO_3$], discharge capacity at 0.40V: 44%, charge capacity at 0.17V:16.8%, modification method: thermal doping + electrochemical doping, first discharge capacity of test cell: 1360 mAh/g, binder: polyacrylic acid, electrolyte: FEC:EC:DMC=1:2:7 $LiPF_6$ 1.0mol/kg, positive electrode: $LiCoO_2$

(continued)

| Table 4 | Half width (°) | crystallite size (nm) | First efficiency of test cell (%) | Capacity retention rate of secondary battery (%) |
|---|---|---|---|---|
| Example 4-1 | 0.756 | 11.42 | 84.3 | 82.1 |
| Example 4-2 | 0.796 | 10.84 | 84.5 | 82.5 |
| Example 4-3 | 1.025 | 8.55 | 84.7 | 83.0 |
| Example 1-3 | 1.218 | 7.21 | 84.5 | 83.5 |
| Example 4-4 | 1.845 | 4.62 | 84.4 | 83.6 |
| Example 4-5 | 2.257 | 3.77 | 84.0 | 83.8 |
| Example 4-6 | 2.593 | 3.29 | 83.9 | 83.88 |
| Example 4-7 | 10.123 | 1.524 | 83.8 | 83.9 |
| Example 4-8 | 20.221 | 0 | 83.7 | 84.1 |

As shown in Table 4, the ratio of the first charge capacity at 0.17V to the first discharge capacity of the test cell and the capacity retention rate of the secondary battery changed in response to the variation in the crystallinity of the silicon compound. In particular, the secondary battery achieved a high retention rate by low crystallinity materials with a crystallite size of 7.5 nm or less, which is attributable to an Si(111) face. The best retention rate was obtained when the silicon compound was amorphous.

(Examples 5-1 to 5-4)

Test cells and laminate film secondary batteries were produced as in example 1-3 except that the median size of the silicon-based active material particles was adjusted. The median size was adjusted by changing pulverization time and classification conditions in production of the silicon compound. The first charge and discharge performance of the test cells and the capacity retention rate of the laminate film secondary batteries in examples 5-1 to 5-4 were investigated. The result is given in Table 5.

[Table 5]

SiOx(x=0.9), XRD half width $2\theta=1.218°$, Si(111) crystallite: 7.21nm, carbon coverage: 5%, Li compound: [$Li_4SiO_4,Li_2SiO_3,Li_2CO_3$], discharge capacity at 0.40V: 44%, charge capacity at 0.17V:16.8%, modification method: thermal doping + electrochemical doping, first discharge capacity of test cell: 1360 mAh/g, binder: polyacrylic acid, electrolyte: FEC:EC:DMC=1:2:7 $LiPF_6$ 1.0mol/kg, positive electrode: $LiCoO_2$

| Table 5 | Median diameter $D_{50}$ ($\mu$m) | First efficiency of test cell (%) | Capacity retention rate of secondary battery (%) |
|---|---|---|---|
| Example 5-1 | 0.52 | 82.8 | 80.9 |
| Example 5-2 | 1.2 | 83.8 | 81.4 |
| Example 1-3 | 5.2 | 84.5 | 83.5 |
| Example 5-3 | 9.8 | 84.2 | 83.4 |
| Example 5-4 | 21.1 | 83.9 | 80.1 |

As shown in Table 5, the capacity retention rate of the second battery changed in response to the variation in the median size of the silicon-based active material particles. Examples 5-1 to 5-3 demonstrated that the retention rate of the secondary battery was increased when the median size was within the range of 0.5 $\mu$m to 20 $\mu$m. In particular, when the median meter was within the range of 4 $\mu$m to 10 $\mu$m (examples 1-3 and 5-3), the capacity retention rate of the secondary battery was significantly improved.

(Examples 6-1 to 6-5)

Test cells and laminate film secondary batteries were produced as in example 1-3 except that the mass percentage of the carbon coating relative to the total mass of the silicon compound and the carbon coating (the content of the carbon coating) was changed. The content of the carbon coating can be controlled by adjusting CVD time, CVD gas, and flowability of the silicon compound powder during CVD. The first charge and discharge performance of the test cells and the capacity retention rate of the laminate film secondary batteries in examples 6-1 to 6-5 were investigated. The result is given in Table 6.

[Table 6]

| SiOx(x=0.9), $D_{50}$=5$\mu$m, XRD half width 2$\theta$=1.218°, Si (111) crystallite: 7.21nm, Li compound: [$Li_4SiO_4$,$Li_2SiO_3$,$Li_2CO_3$], discharge capacity at 0.40V: 44%, charge capacity at 0.17V:16.8%, modification method: thermal doping + electrochemical doping, first discharge capacity of test cell: 1360 mAh/g, binder: polyacrylic acid, electrolyte: FEC:EC:DMC=1:2:7 $LiPF_6$ 1.0mol/kg, positive electrode: $LiCoO_2$ | | | |
|---|---|---|---|
| Table 6 | Carbon coating content (mass%) | First efficiency of test cell (%) | Capacity retention rate of secondary battery (%) |
| Example 6-1 | 0.65 | 82.1 | 79.8 |
| Example 6-2 | 1.1 | 84.1 | 82.5 |
| Example 1-3 | 5.0 | 84.5 | 83.5 |
| Example 6-3 | 10.5 | 84.6 | 82.6 |
| Example 6-4 | 20.6 | 84.1 | 81.6 |
| Example 6-5 | 49.0 | 82.5 | 80.9 |

As shown in Table 6, when the carbon coating coverage is within the range of 5 mass% to 20 mass%, both the first efficiency of the test cell and the capacity retention rate of the secondary battery were excellent. This is because when the carbon coating coverage is 5 mass% or more, the silicon compound has good electronic conductivity; and when the carbon coating coverage is 20 mass% or less, the silicon compound has good ionic conductivity.

(Examples 7-1 to 7-5)

Test cells and laminate film secondary batteries were produced as in example 1-3 except that the ratio of the discharge capacity at a voltage of the electrode of 0.4V to the first discharge capacity of the test cell was changed as shown in Table 7. The discharge capacity of the test cell at a voltage of the electrode of 0.4V can be controlled by changing the firing temperature in the Li-doping modification. The first charge and discharge performance of the test cells and the capacity retention rate of the laminate film secondary batteries in examples 7-1 to 7-5 were investigated. The result is given in Table 7.

[Table 7]

| SiOx(x=0.9), $D_{50}$=5$\mu$m, XRD half width 2$\theta$=1.218°, Si(111) crystallite: 7.21nm, carbon coverage: 5 mass%, Li compound: [$Li_4SiO_4$,$Li_2SiO_3$,$Li_2CO_3$], charge capacity at 0.17V:16.8%, modification method: thermal doping + electrochemical doping, first discharge capacity of test cell: 1360 mAh/g, binder: polyacrylic acid, electrolyte: FEC:EC:DMC=1:2:7 $LiPF_6$ 1.0mol/kg, positive electrode: $LiCoO_2$ | | | |
|---|---|---|---|
| Table 7 | Ratio of discharge capacity at 0. 4V to first discharge capacity (%) | First efficiency of test cell (%) | Capacity retention rate of secondary battery (%) |
| Example 7-1 | 62.0 | 84.0 | 80.9 |
| Example 7-2 | 53.0 | 84.6 | 84.1 |
| Example 7-3 | 44.0 | 84.5 | 85.5 |
| Example 7-4 | 38.0 | 83.8 | 81.8 |
| Example 7-5 | 28.0 | 82.7 | 77.8 |

| SiOx(x=0.9), $D_{50}$=5$\mu$m, XRD half width 2$\theta$=1.218°, Si(111) crystallite: 7.21nm, carbon coverage: 5 mass%, Li compound: [$Li_4SiO_4$,$Li_2SiO_3$,$Li_2CO_3$], charge capacity at 0.17V:16.8%, modification method: thermal doping + electrochemical doping, first discharge capacity of test cell: 1360 mAh/g, binder: polyacrylic acid, electrolyte: FEC:EC:DMC≡1:2:7 $LiPF_6$ 1.0mol/kg, positive electrode: $LiCoO_2$ | | | |
|---|---|---|---|
| Table 7 | Ratio of discharge capacity at 0. 4V to first discharge capacity (%) | First efficiency of test cell (%) | Capacity retention rate of secondary battery (%) |
| Example 7-1 | 62.0 | 84.0 | 80.9 |
| Example 7-2 | 53.0 | 84.6 | 84.1 |
| Example 7-3 | 44.0 | 84.5 | 85.5 |
| Example 7-4 | 38.0 | 83.8 | 81.8 |
| Example 7-5 | 28.0 | 82.7 | 77.8 |

As shown in Table 7, the first efficiency of the test cell and the capacity retention rate of the second battery changed in response to the variation in the ratio of the discharge capacity at a voltage of the electrode of 0.4V to the first discharge capacity of the test cell. In Table 7, examples 7-1 to 7-5 show that when the ratio of the discharge capacity at a voltage of the electrode of 0.4V to the first discharge capacity of the test cell was within the range of 35% to 60%, the secondary battery achieved good capacity retention rate. Further, better discharge capacity was obtained within the range of 40% to 60%.

(Examples 8-1 to 8-3)

Test cells and laminate film secondary batteries were produced as in example 1-3 except that the Li-doping modification method was changed. The first charge and discharge performance of the test cells and the capacity retention rate of the laminate film secondary batteries in examples 8-1 to 8-3 were investigated. The result is given in Table 8.

[Table 8]

| SiOx(x=0.9), $D_{50}$=5$\mu$m, XRD half width 2$\theta$=1.218°, Si(111) crystallite: 7.21nm, carbon coverage: 5%, Li compound: [$Li_4SiO_4$,$Li_2SiO_3$,$Li_2CO_3$], discharge capacity at 0.40V: 44%, charge capacity at 0.17V:16.8%, first discharge capacity of test cell: 1360 mAh/g, binder: polyacrylic acid, electrolyte: FEC:EC:DMC=1:2:7 $LiPF_6$ 1.0mol/kg, positive electrode: $LiCoO_2$ | | | |
|---|---|---|---|
| Table 8 | Modification method | First efficiency of test cell (%) | Capacity retention rate of secondary battery (%) |
| Example 8-1 | contact method | 84.5 | 79.8 |
| Example 8-2 | thermal doping method | 84.7 | 80.8 |
| Example 8-3 | electrochemical doping method | 84.6 | 81.2 |
| Example 1-3 | thermal doping method + electrochemical doping method | 84.5 | 83.5 |

The secondary battery achieved better capacity retention rate by thermal doping method, electrochemical doping method, or combination thereof than the contact method in which a lithium metal is brought into direct contact with a negative electrode or negative electrode active material particles at room temperature. This is because the thermal doping method and the electrochemical doping method enabled generation of a more stable lithium compound, and thus not only the test cell more surely exhibited a first efficiency of 82% or more, but also the silicon-based active material was stabilized in water slurry in the battery production. Thus, the capacity retention rate of the secondary battery could be improved.

(Examples 9-1 and 9-2)

Test cells and laminate film secondary batteries were produced as in example 1-3 except that the first charge and discharge capacity of the test cell was changed by adjusting the lithium content of the silicon compound. The lithium content was adjusted by changing the amount of lithium inserted into or mixed with the silicon compound in the Li-doping modification. The first charge and discharge performance of the test cells and the capacity retention rate of the laminate film secondary batteries in examples 9-1 and 9-2 were investigated. The result is given in Table 9.

[Table 9]

SiOx (x=0.9), $D_{50}$=μm, XRD half width 2θ=1.218°, Si(111) crystallite: 7.21nm, carbon coverage: 5%, Li compound: [$Li_4SiO_4$,$Li_2SiO_3$,$Li_2CO_3$], discharge capacity at 0.40V: 44%, charge capacity at 0.17V:16.8%, modification method: thermal doping + electrochemical doping, binder: polyacrylic acid, electrolyte: FEC:EC:DMC=1:2:7 $LiPF_6$ 1.0mol/kg, positive electrode: $LiCoO_2$

| Table 9 | Lithium content (mass%) | First discharge capacity (mAh/g) | First efficiency of test cell (%) | Capacity retention rate of secondary battery (%) |
|---|---|---|---|---|
| Comparative example 2-3 | 4.8 | 1540.0 | 76.5 | 74.1 |
| Example 9-1 | 10.8 | 1480.0 | 82.1 | 82.1 |
| Example 1-3 | 13.5 | 1360.0 | 84.5 | 83.5 |
| Example 9-2 | 24.6 | 1100.0 | 92.1 | 80.1 |

As shown in Table 9, when the first discharge capacity of the test cell was 1520 mAh/g or less, the test cell more surely exhibited a first efficiency of 82% or more since the silicon compound was doped with sufficient amount of lithium. The capacity retention rate of the secondary battery was thereby more improved, as shown in Table 9. Moreover, when the first discharge capacity of the test cell was 1450 mAh/g or less, the first efficiency of the test cell was particularly improved, so that the capacity retention rate of the secondary battery was particularly improved. When the first discharge capacity of the test cell was 1200 mAh/g or more, Li-doping amount was appropriately adjusted, and the reduction in conductivity and the gelation at the production of slurry could be inhibited. Accordingly, the capacity retention rate of the secondary battery was improved.

It is to be noted that the present invention is not restricted to the foregoing embodiment. The embodiment is just an exemplification, and any examples that have substantially the same feature and demonstrate the same functions and effects as those in the technical concept described in claims of the present invention are included in the technical scope of the present invention.

**Claims**

1.    A negative electrode active material for a non-aqueous electrolyte secondary battery, comprising negative electrode active material particles containing a silicon compound expressed by $SiO_x$ where 0.5≤x≤1.6, the silicon compound containing a lithium compound, wherein
a test cell combining an electrode containing the negative electrode active material particles and a counter electrode composed of a metallic lithium exhibits a first efficiency of 82% or more, and a charge capacity of the test cell at a voltage of the electrode of 0.17V ranges from 7% to 30% of a first discharge capacity of the test cell when the test cell is successively subjected to a constant current charge until the voltage of the electrode reaches 0.0V, a constant voltage charge until a current is decreased to one tenth of a current at the constant current charge, and a constant current discharge until the voltage of the electrode reaches 1.2V.

2.    The negative electrode active material for a non-aqueous electrolyte secondary battery according to claim 1, wherein the charge capacity at a voltage of the electrode of 0.17V ranges from 11% to 30% of the first discharge capacity of the test cell.

3.    The negative electrode active material for a non-aqueous electrolyte secondary battery according to claim 1 or 2, wherein a discharge capacity at a voltage of the electrode of 0.4V ranges from 35% to 60% of the first discharge capacity of the test cell.

4. The negative electrode active material for a non-aqueous electrolyte secondary battery according to claim 3, wherein the discharge capacity at a voltage of the electrode of 0.4V ranges from 40% to 50% of the first discharge capacity of the test cell.

5. The negative electrode active material for a non-aqueous electrolyte secondary battery according to any one of claims 1 to 4, wherein the first discharge capacity of the test cell ranges from 1200 mAh/g to 1520 mAh/g.

6. The negative electrode active material for a non-aqueous electrolyte secondary battery according to claim 5, wherein the first discharge capacity of the test cell ranges from 1200 mAh/g to 1450 mAh/g.

7. The negative electrode active material for a non-aqueous electrolyte secondary battery according to any one of claims 1 to 6, wherein the silicon compound contains one or more of $Li_2SiO_3$, $Li_6Si_2O_7$, and $Li_4SiO_4$ therein.

8. The negative electrode active material for a non-aqueous electrolyte secondary battery according to any one of claims 1 to 7, wherein the silicon compound contains one or more of $Li_2CO_3$, $Li_2O$, and $LiOH$ on a surface thereof.

9. The negative electrode active material for a non-aqueous electrolyte secondary battery according to any one of claims 1 to 8, wherein the silicon compound is modified by inserting lithium into the silicon compound in an electrochemical manner, a thermal manner, or both of them.

10. The negative electrode active material for a non-aqueous electrolyte secondary battery according to any one of claims 1 to 9, wherein the silicon compound is coated with a carbon coating.

11. The negative electrode active material for a non-aqueous electrolyte secondary battery according to claim 10, wherein a mass of the carbon coating ranges from 5 mass% to 20 mass% of a total mass of the silicon compound and the carbon coating.

12. The negative electrode active material for a non-aqueous electrolyte secondary battery according to any one of claims 1 to 11, wherein the negative electrode active material particles exhibits a diffraction peak having a half width $(2\theta)$ of 1.2° or more, the diffraction peak being attributable to an Si(111) crystal face and obtained by X-ray diffraction, and a crystallite size attributable to the crystal face is 7.5 nm or less.

13. The negative electrode active material for a non-aqueous electrolyte secondary battery according to any one of claims 1 to 12, wherein the negative electrode active material particles have a median size ranging from 0.5 $\mu$m to 20 $\mu$m.

14. A non-aqueous electrolyte secondary battery, comprising the negative electrode active material according to any one of claims 1 to 13 and a carbon-based negative electrode active material.

15. The non-aqueous electrolyte secondary battery according to claim 14, wherein the negative electrode active material is contained in amount of 10 mass% or more relative to the carbon-based negative electrode active material.

16. A method of producing a negative electrode active material for a non-aqueous electrolyte secondary battery, the method comprising:

   producing particles of a silicon compound expressed by $SiO_x$ where $0.5 \leq x \leq 1.6$; and
   inserting lithium into the particles of the silicon compound and thereby forming a lithium compound in the silicon compound to modify the particles of the silicon compound, wherein
   the particles of the silicon compound is modified so that a test cell combining an electrode containing the modified particles of the silicon compound and a counter electrode composed of a metallic lithium exhibits a first efficiency of 82% or more, and a charge capacity of the test cell at a voltage of the electrode of 0.17V ranges from 7% to 30% of a first discharge capacity of the test cell when the test cell is successively subjected to a constant current charge until a voltage of the electrode reaches 0.0V, a constant voltage charge until a current is decreased to one tenth of a current at the constant current charge, and a constant current discharge until the voltage of the electrode reaches 1.2V, whereby the modified particles of the silicon compound is obtained as a negative electrode active material.

17. A method of producing a negative electrode material for a non-aqueous electrolyte secondary battery, the negative electrode material containing negative electrode active material particles, the method comprising:

producing particles of a silicon compound expressed by $SiO_x$ where $0.5 \leq x \leq 1.6$;

inserting lithium into the particles of the silicon compound and thereby forming a lithium compound in the silicon compound to modify the particles of the silicon compound;

selecting, from the modified particles of the silicon compound, silicon compound particles satisfying that a test cell combining an electrode containing the silicon compound particles and a counter electrode composed of a metallic lithium exhibits a first efficiency of 82% or more, and a charge capacity of the test cell at a voltage of the electrode of 0.17V ranges from 7% to 30% of a first discharge capacity of the test cell when the test cell is successively subjected to a constant current charge until a voltage of the electrode reaches 0.0V, a constant voltage charge until a current is decreased to one tenth of a current at the constant current charge, and a constant current discharge until the voltage of the electrode reaches 1.2V; and

producing a negative electrode material using the selected silicon compound particles as a negative electrode active material particles.

Fig.1

Fig.2

Fig.3

30

35

31

34

32

33

Fig.4

Europäisches
Patentamt

European
Patent Office

Office européen
des brevets

# EUROPEAN SEARCH REPORT

Application Number

EP 16 00 0821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/049992 A1 (SANYO ELECTRIC CO [JP]) 3 April 2014 (2014-04-03) * the whole document * ----- | 1-11, 13-17 | INV. H01M4/04 H01M4/134 H01M4/1395 |
| X | US 2014/377456 A1 (KAWADA NOBUO [JP]) 25 December 2014 (2014-12-25) * paragraphs [0003], [0076], [0089], [0117], [0124], [0133] * ----- | 1,12 | H01M4/38 H01M4/48 |
| A | CA 2 889 306 A1 (HITACHI CHEMICAL CO LTD [JP]) 1 May 2014 (2014-05-01) * paragraphs [0022] - [0023], [0082] - [0088] * ----- | 12 | |

TECHNICAL FIELDS
SEARCHED (IPC)

H01M

The present search report has been drawn up for all claims

| Place of search | Date of completion of the search | Examiner |
|---|---|---|
| Munich | 9 June 2016 | Hoyal, Barnaby |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.                    EP 16 00 0821

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2016

| Patent document cited in search report | | | Publication date | Patent family member(s) | | | Publication date |
|---|---|---|---|---|---|---|---|
| WO 2014049992 | A1 | | 03-04-2014 | CN | 104603993 | A | 06-05-2015 |
| | | | | US | 2015221950 | A1 | 06-08-2015 |
| | | | | WO | 2014049992 | A1 | 03-04-2014 |
| US 2014377456 | A1 | | 25-12-2014 | CN | 102214823 | A | 12-10-2011 |
| | | | | EP | 2372817 | A1 | 05-10-2011 |
| | | | | JP | 5411781 | B2 | 12-02-2014 |
| | | | | JP | 2011222153 | A | 04-11-2011 |
| | | | | KR | 20110112216 | A | 12-10-2011 |
| | | | | TW | 201212356 | A | 16-03-2012 |
| | | | | US | 2011244334 | A1 | 06-10-2011 |
| | | | | US | 2014377456 | A1 | 25-12-2014 |
| CA 2889306 | A1 | | 01-05-2014 | CA | 2889306 | A1 | 01-05-2014 |
| | | | | CN | 104737336 | A | 24-06-2015 |
| | | | | EP | 2913872 | A1 | 02-09-2015 |
| | | | | KR | 20150079603 | A | 08-07-2015 |
| | | | | TW | 201424098 | A | 16-06-2014 |
| | | | | US | 2015270540 | A1 | 24-09-2015 |
| | | | | WO | 2014065418 | A1 | 01-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001185127 A
- JP 2002042806 A
- JP 2006164954 A
- JP 2006114454 A
- JP 2009070825 A
- JP 2013513206 A
- JP 2008282819 A
- JP 2008251369 A
- JP 2008177346 A
- JP 2007234255 A
- JP 2009212074 A
- JP 2009205950 A
- JP 2997741 B